# FASCICULE DE BREVET EUROPEEN

(11) **EP 2 991 934 B1**
(45) Date de publication et mention de la délivrance du brevet: **10.07.2019**
(21) Numéro de dépôt: 14727623.2
(22) Date de dépôt: 02.05.2014
(51) Int. Cl.: C02F 9/10, C02F 11/10, C02F 9/02, C02F 9/08

(54) **PROCÉDÉ D'ULTRA-DÉSHYDRATATION DE PRODUITS ÉPAISSIS OU PÂTEUX FORMANT UNE BIOMASSE, ET INSTALLATION POUR LA MISE EN OEUVRE DU PROCÉDÉ**
VERFAHREN ZUR ULTRA-ENTWÄSSERUNG DICKFLÜSSIGER ODER BREIIGER BIOMASSE BILDENDER PRODUKTE SOWIE VORRICHTUNG ZUR DURCHFÜHRUNG DES VERFAHRENS
METHOD FOR ULTRA DEWATERING VISCOUS OR PASTY BIOMASS FORMING PRODUCTS AND INSTALLATION FOR CARRYING OUT THE METHOD

(30) Priorité: 03.05.2013 FR 1354088
(43) Date de publication de la demande: 09.03.2016
(60) Demande divisionnaire: 17195044.7
(73) Titulaire: Suez International, 92040 Paris la Défense Cedex (FR); TerraNova Energy GmbH, 40231 Düsseldorf (DE)
(72) Inventeur: PARDO, Pierre, Emmanuel, F-91400 Orsay (FR); JUDENNE, Eric, F-92370 Chaville (FR); BUTTMANN, Marc, 40235 Düsseldorf (DE)
(74) Mandataire: IPAZ
(86) Numéro de dépôt international: PCT/IB2014/061156
(87) Numéro de publication internationale: WO 2014/178028

(56) Documents cités:
- EP-A1- 1 970 431
- WO-A2-03/043939
- US-A- 3 207 064
- US-A- 5 143 628
- DATABASE WPI Week 201329 Thomson Scientific, London, GB; AN 2013-G01434 XP002718924, -& CN 102 875 005 A (GUANGDONG INST ECO ENVIRONMENT&SOIL SC) 16 janvier 2013 (2013-01-16)

## Description

L'invention est relative à un procédé d'ultra-déshydratation de produits épaissis ou pâteux formant une biomasse de boues de station d'épuration.

Le séchage de tels produits est utile pour une valorisation multi-filière des produits séchés, notamment pour :
- un stockage de longue durée sans fermentation ;
- une valorisation agricole simple et acceptable par les populations, grâce à un produit "hygiénisé" ;
- une valorisation thermique intéressante.

Mais la technologie du séchage s'accompagne de plusieurs freins, en particulier :
- sa consommation énergétique élevée, principalement à base d'énergie fossile ;
- la complexité de stockage des produits séchés organiques qui peuvent facilement s'auto-enflammer.

Une boue ultra-déshydratée à au moins 50 % de siccité et de préférence à 65 % ou plus de siccité présente des avantages :
- absence d'auto-inflammation lors du stockage ;
- tout en conservant une valorisation thermique intéressante.
- hygiénisation du produit

Des sécheurs existant actuellement, de type direct ou indirect, peuvent nécessiter pour le séchage de la boue une énergie d'environ 900-1100 kWh/TEE (tonne d'eau évaporée).

Des systèmes de sécheurs avec pré-évaporation des boues permettent d'obtenir des consommations plus faibles, d'environ 700-800 kWh/TEE.

Des sécheurs utilisant des pompes à chaleur revendiquent des consommations purement électriques de 300 kWhe/TEE (kWhe = kilowattheure électrique), ce qui revient à un équivalent d'environ 900 kWh/TEE en thermique.

Des sécheurs utilisant la compression mécanique de vapeur revendiquent des consommations thermiques inférieures à 300 kWhe/TEE, mais la technologie de compression mécanique de vapeur n'a pas montré des capacités de réalisation industrielle.

Par ailleurs, des conditionnements thermiques de produits pâteux, et de la boue en particulier, ont montré une capacité à nettement améliorer la siccité d'une boue en déshydratation par filtre-presse. Les conditionnements thermiques consomment peu d'énergie, en particulier lorsqu'ils sont utilisés sur des produits pâteux et non liquides car ils n'entraînent pas d'évaporation de l'eau mais uniquement un chauffage. Il n'y a donc pas de perte de chaleur sensible.

Un inconvénient des filtres-presses réside dans l'opération de débâtissage qui consiste à évacuer le gâteau de filtration de la presse. Cette opération sur filtre-presse nécessite généralement une intervention manuelle, et son automatisation est difficile, sinon impossible. L'opération de pressée et de débâtissage d'un filtre presse à plateaux classique s'accompagne de dégagement d'odeurs dans l'atmosphère.

En outre, le procédé de séchage avec conditionnement thermique et filtre-presse s'accompagne de problèmes d'intégration de la filière de production des boues ultra-déshydratées concernant notamment :
- la consommation totale énergétique pour produire une boue ultra-déshydratée à au moins 50 % de siccité;
- la gestion des odeurs sur l'ensemble de la chaîne de traitement ;
- l'automatisation de la chaîne de traitement ;
- la capacité de gestion et de stockage des boues ultra-déshydratées.

EP1970431A a pour objet un dispositif de carbonisation hydrothermale comprenant un réacteur sous pression. Un post-traitement pour déshydrater les produits en sortie est prévu avec la mise en oeuvre d'une presse à briquettes.

L'invention a pour but, surtout, de proposer un procédé qui permet de diminuer très sensiblement, par rapport à un séchage thermique, la consommation totale énergétique pour produire une boue ultra-déshydratée, à au moins 50 % de siccité. Le procédé doit en outre permettre de : gérer les odeurs, empêcher qu'elles ne se répandent dans l'atmosphère, automatiser la production et améliorer la capacité de gestion et de stockage des boues ultra-déshydratées.

L'invention prévoit le couplage d'une carbonisation hydrothermale de boues déshydratées, présentant une siccité de 4 % à 25 %, avec une presse à piston.

Selon l'invention, le procédé d'ultra-déshydratation de produits épaissis ou pâteux, formant une biomasse, de boues de station d'épuration, est caractérisé en ce que les produits, de siccité de 4 à 25%, sont soumis à un procédé tel que défini dans la revendication 1, comprenant entre autres les étapes suivantes :
- traitement de type carbonisation hydrothermale, comprenant une mise sous pression et un conditionnement thermique pour un séjour dans un réacteur fermé, suivi d'une décompression,
- puis déshydratation des produits par presse à piston, jusqu'à obtention d'une siccité supérieure à 50%,
- la température du produit en amont de la déshydratation par presse à piston étant régulée par refroidissement entre 40 et 90°C, avantageusement à environ 70°C, afin d'optimiser la filtrabilité dans la presse à piston,
   les étapes du procédé étant effectuées en espace confiné permettant d'empêcher la diffusion d'odeurs dans l'atmosphère.

Pour le traitement de type carbonisation hydrothermale, la mise sous pression dans le réacteur est comprise entre 10 et 30 bars, de préférence de l'ordre de 20 bars, et le conditionnement thermique est assuré par un chauffage des produits entre 150 et 250°C dans le réacteur.

La durée du séjour des produits dans le réacteur est généralement de plusieurs minutes, notamment entre 15 et 200 minutes.

Le procédé comporte avantageusement un préchauffage du produit avant le traitement de type carbonisation hydrothermale.

Le traitement de type carbonisation hydrothermale peut comprendre les étapes supplémentaires suivantes
- une injection de réactif en amont ou dans le réacteur pour favoriser la réaction,
- un chauffage pour compléter la température au niveau du réacteur.

De préférence, la déshydratation des produits par presse à piston est effectuée à travers des drains souples formant filtres, perméables au liquide qui passe de l'extérieur à l'intérieur des drains, tandis que les matières solides sont retenues à l'extérieur pour être évacuées par débâtissage.

La régulation de la température du produit en amont de la déshydratation peut être effectuée à l'aide d'un échangeur refroidisseur.

Avantageusement, un conditionnement du produit sortant de la presse à piston est effectué à l'aide d'un émotteur ou d'un broyeur.

Un refroidissement dédié du produit en sortie de la presse à piston peut être effectué pour diminuer sa température, de préférence à une valeur inférieure à 40°C. Le refroidissement dédié peut être de type indirect et être effectué en dépression.

Un stockage couvert et désodorisé de produit peut être réalisé entre le traitement de type carbonisation hydrothermale et la presse à piston. Un lancement automatique de la phase de déshydratation par presse à piston peut être assuré en fonction du niveau de produit dans le stockage.

Avantageusement, une désodorisation régulée est assurée pendant la phase de débâtissage par une mise en dépression permettant un soutirage des gaz ou vapeurs générant les odeurs. Les incondensables peuvent être soumis à un refroidissement. Une utilisation des incondensables est possible dans une chaudière à des fins thermiques et de traitement des odeurs.

L'invention est également relative à une installation d'ultra-déshydratation de produits épaissis ou pâteux formant une biomasse, de boues de station d'épuration, selon la revendication 8 notamment pour la mise en oeuvre du procédé défini précédemment, caractérisée entre autres en ce qu'elle comporte :
- une unité pour assurer un traitement de type carbonisation hydrothermale, comprenant un moyen de mise sous pression des produits, un moyen de préchauffage de ces produits, un réacteur fermé pour un séjour de carbonisation des produits réchauffés, et un moyen de décompression des produits,
- un dispositif de refroidissement des produits sortant du traitement de type carbonisation hydrothermale, en particulier un échangeur refroidisseur,
- une presse à piston pour la déshydratation des produits après traitement de type carbonisation hydrothermale, avec obtention d'une siccité supérieure à 50%,
les différents composants de l'installation étant en espace confiné permettant d'empêcher la diffusion d'odeurs dans l'atmosphère et de gérer ces odeurs.

Une bâche de stockage couverte et désodorisée peut être disposée entre l'unité de traitement de type carbonisation hydrothermale et la presse à piston.

La presse à piston est prévue pour effectuer un pressage des produits à travers des drains souples formant filtres, perméables au liquide qui passe de l'extérieur à l'intérieur des drains sous l'effet de la pression entre deux plaques entre lesquelles s'étendent les drains, lesquels se déforment lorsque les plaques se rapprochent l'une de l'autre, tandis que les matières solides sont retenues à l'extérieur des drains pour être évacuées lors du débâtissage.

L'installation peut comporter un ensemble de commande permettant de contrôler la filtrabilité du produit, l'ensemble de commande effectuant une mesure du temps de filtration de la boue à chaque pressage exercé par un piston de la presse à piston, les temps de filtration cumulés étant comparés à une valeur de référence, et si la durée de filtration, correspondant à la somme des temps cumulés, augmente, l'ensemble de commande donne une consigne de température supérieure pour la boue introduite dans la presse.

Avantageusement, l'ensemble de commande contrôle la quantité de réactif injecté si la régulation de la température vient à sa limite.

La presse à piston peut posséder, au débâtissage, une séquence d'ouverture lente d'une durée d'au moins 10 secondes pour permettre de canaliser les odeurs.

Une liaison entre la sortie de la presse à piston et l'émotteur ou le broyeur peut être réalisée sous forme d'une trémie rigide et/ou d'une gaine souple formant conduite et permettant la canalisation des odeurs.

De préférence, l'ensemble des zones de l'installation pouvant être génératrices d'odeurs, en particulier le stockage, la presse à piston et l'émotteur, sont mises en dépression par un système de ventilation désodorisation.

L'installation, selon une variante, peut comporter une alimentation directe de la presse à piston en sortie d'une décompression, en aval de l'unité pour traitement de type carbonisation hydrothermale.

Parmi les avantages apportés par l'invention, on peut citer :
- une consommation réduite d'énergie ;
- une gestion efficace des odeurs,
- une possibilité de fonctionnement automatique,
- un stockage adapté des boues ultra-déshydratées.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est un schéma d'une installation de déshydratation de produits pâteux, notamment de boues de stations d'épuration, selon l'invention.
Fig. 2 est un schéma d'une variante de l'installation de Fig. 1.
Fig. 3 est une coupe verticale axiale schématique d'une presse à piston en cours de fonctionnement, et
Fig. 4 est une coupe verticale axiale de la presse à piston lors de l'opération de débâtissage.

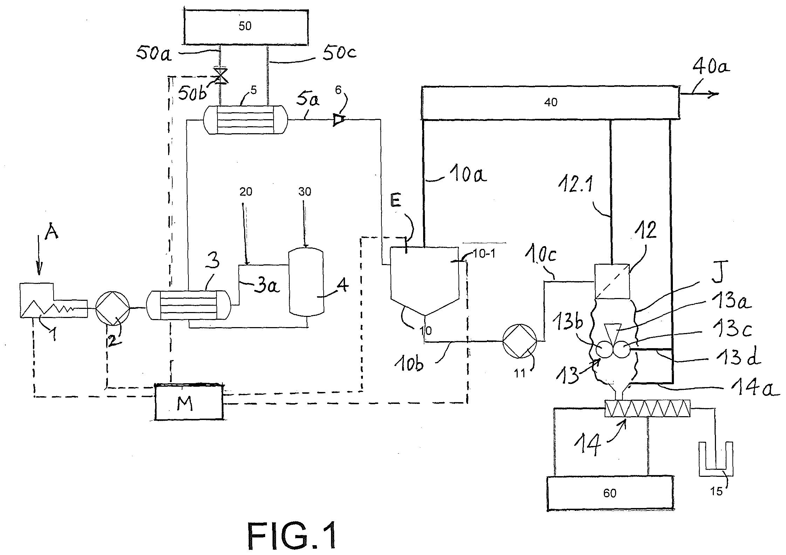

En se reportant à Fig. 1 des dessins, on peut voir que le produit pâteux à déshydrater, notamment de la boue de station d'épuration, est introduit, comme indiqué par la flèche A, dans un ensemble de mise en pression comportant un équipement de gavage, formé par une vis 1, et un moyen de pompage formé par une pompe 2. Le produit introduit présente une siccité comprise entre 4 et 25 %. L'ensemble de pompage 1, 2 peut être du type pompes à piston, à rotor excentré, à lobes ou autre configuration classique de mise en pression.

Le produit sort de la pompe 2 sous pression, de préférence comprise entre 10 et 30 bars, avantageusement de l'ordre de 20 bars, pour être préchauffé dans un échangeur thermique 3.

Le produit préchauffé sortant de l'échangeur 3 est dirigé, par une conduite 3a, vers un réacteur 4 fermé pour y demeurer pendant un temps de séjour de plusieurs minutes, notamment de 15 à 200 minutes, afin d'y subir une carbonisation hydrothermale. Les produits sont chauffés dans le réacteur 4, à une température généralement comprise entre 150-250°C, selon un conditionnement, notamment une pression comprise entre 15 et 25 bars, avantageusement de l'ordre de 20 bars, qui permet la catalyse. Tous les types de carbonisation hydrothermale peuvent être mis en oeuvre.

Une décompression des produits, sortant du réacteur 4, est prévue, en particulier à l'aide d'un moyen de décompression, tel qu'une vanne 6, installé sur la conduite où passent les produits sortant du réacteur 4.

La carbonisation hydrothermale comprend, de préférence, les étapes supplémentaires suivantes :
- une injection 20 de réactif en amont du réacteur 4, comme illustré sur Fig. 1, ou dans ce réacteur, pour favoriser la réaction de carbonisation hydrothermale ;
- un moyen de chauffage 30 pour ajuster la température au niveau du réacteur 4.

La carbonisation hydrothermale comprend un moyen de refroidissement, en particulier un échangeur thermique 5, pour le refroidissement du produit sortant avant sa décompression par la vanne 6.

L'échangeur thermique 3 peut être prévu pour un réchauffage du produit qui arrive, par le produit sortant du réacteur 4, comme illustré sur Fig. 1. En variante, l'échange thermique peut être assuré via un fluide intermédiaire, notamment entre le produit qui arrive et de l'huile pour le chauffage, ou autre configuration classique de chauffage de produits.

Le réacteur 4 peut se présenter sous différentes formes et peut être, ou non, muni d'un agitateur, et/ou de chicanes. La décompression peut être assurée par la vanne 6 ou par un diaphragme ou autre moyen mécanique.

Les moyens pour chauffer les produits pâteux, notamment la boue, pour la maintenir en température, la décomprimer, peuvent revêtir toutes les configurations classiques.

Le moyen de chauffage 30 du réacteur 4 peut être un moyen de chauffage par voie indirecte comprenant une enveloppe entourant le réacteur 4 pour former une chambre dans laquelle circule un fluide chaud, ou par voie directe consistant en une injection de vapeur dans le réacteur 4.

Le ou les réactifs de l'injection 20 pour la carbonisation hydrothermale peuvent être choisis parmi les réactifs classiques tels que oxydant, acide, ou combinaison des deux.

Le refroidissement du produit sortant au niveau de l'échangeur 5 peut être effectué par tout type d'échangeur classique entre produit sortant / air de refroidissement, ou produit sortant / eau de refroidissement.

Le fluide de refroidissement de l'échangeur 5 provient d'une unité 50, par une conduite d'arrivée 50a munie d'une vanne 50b à ouverture réglable commandée par un ensemble de commande M. Le fluide de refroidissement, réchauffé dans l'échangeur 5, retourne par une conduite 50c à l'unité 50 pour y être refroidi ou y être remplacé par un fluide déjà froid.

Le refroidissement assuré par l'échangeur 5 est régulé pour permettre une optimisation de la déshydratation. En effet, si le produit sortant de l'échangeur 5 est trop chaud, des quantités importantes de vapeur sont libérées, tandis que si le produit est trop froid, la capacité d'ultra-déshydratation ultérieure est compromise. La température du produit sortant de l'échangeur 5 est ajustée pour optimiser la filtrabilité du produit lors de l'étape de déshydratation par une presse à piston 12. La température du produit sortant de l'échangeur 5 est comprise entre 40° et 90°C, en particulier d'environ 70°C.

L'unité de carbonisation hydrothermale, comportant les éléments 1 à 6, 20 et 30, est réalisée de manière étanche, de telle sorte que des gaz ou vapeurs ne puissent s'échapper à l'atmosphère. En cas de joint tournant, une aspiration des odeurs au niveau de ce joint est mise en place.

Les produits, notamment les boues, conditionnés par la carbonisation hydrothermale et refroidis, sont dirigés par une conduite 5a vers une bâche, ou enceinte, fermée 10 de stockage mise en légère dépression, par le biais d'un tirage exercé par une conduite 10a reliée à la bâche 10, à partir d'une unité 40 d'aspiration. L'unité 40 assure en outre un traitement de l'air avant son rejet à l'atmosphère.

Au moins un capteur de température 10-1 fournit en permanence la température dans la masse de produits contenue par la bâche 10. Cette température est communiquée à l'ensemble de commande M qui ajuste le débit de fluide de refroidissement dans l'échangeur 5 afin de maintenir une température de produit, dans la bâche 10, permettant la meilleure filtrabilité lors de l'étape suivante, avec une revaporisation minimum. De préférence, la température du produit dans l'enceinte 10 et à sa sortie dans une conduite 10b est maintenue entre 40 et 90°C, avantageusement sensiblement égale à 70°C.

Des moyens pour mélanger le produit dans la bâche de stockage 10 peuvent être prévus si le volume de cette bâche est tel que la mesure de température 10-1 en un point risque de ne pas être représentative de la température des différentes zones du produit. Le nombre d'instruments de mesure, notamment de capteurs de température, peut être adapté en fonction de la taille de la bâche 10 et de la masse de produits stockés pour permettre une représentativité de la mesure globale de température. La bâche de stockage 10 peut comprendre également un moyen de mesure E du niveau de produit. Le résultat de la mesure de niveau est transmis à l'ensemble de commande M pour l'automatisation du procédé de traitement :
- en cas de niveau haut dépassant une limite haute déterminée, l'arrêt du fonctionnement du conditionnement thermique est commandé, par arrêt de l'ensemble de pompage 1, 2 ;
- en cas de niveau bas, inférieur à une limite basse déterminée, le fonctionnement des unités en aval de la bâche 10, notamment d'une pompe 11 et d'une presse à piston 12, est arrêté ;
- dans le cas où le niveau dans la bâche 10 est compris entre la limite basse et la limite haute, la déshydratation par la presse à piston 12 est mise en marche, ainsi que la pompe 11 assurant le transfert du produit entre la sortie de la bâche 10 et l'entrée de la presse à piston 12.

Les boues sortant de la bâche 10 par la conduite 10b sont reprises par la pompe haute pression 11 qui gave la presse à piston 12.

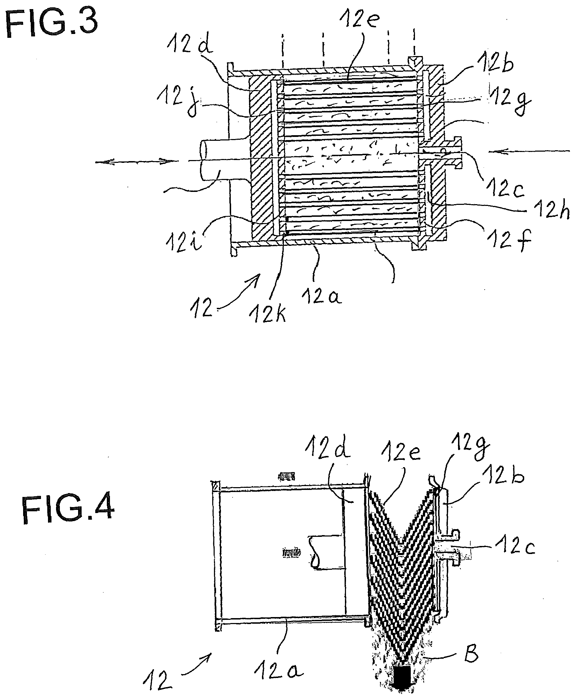

Comme visible sur Fig. 3, la filtration dans la presse 12 à piston est effectuée dans un cylindre fermé 12a qui permet de maintenir confinées les odeurs pendant tout le pressage. A une extrémité, située sur la droite selon Fig. 3, le cylindre 12a est fermé de manière étanche par une plaque 12b, qui peut en être écartée suivant la direction axiale comme illustré sur Fig. 4.

Le produit à presser est introduit dans le cylindre 12a par un canal 12c prévu au centre de la plaque 12b. A distance de la plaque 12b, un piston 12d soumis à une pression hydraulique ou pneumatique peut coulisser de manière étanche dans le cylindre 12 pour exercer un pressage des produits introduits dans le cylindre 12. Des drains 12e, formés par des gaines flexibles en matière perméable au liquide mais imperméable à l'égard des solides, sont fixés à une contre-plaque 12f écartée de la plaque 12b, mais liée à celle-ci. Chaque drain 12e comporte un passage intérieur qui débouche dans une ouverture 12g associée, prévue dans la contre-plaque 12f. Les ouvertures 12g communiquent avec une chambre 12h, comprise entre la contre-plaque 12f et la plaque 12b, qui recueille le liquide, essentiellement de l'eau, évacué vers l'extérieur par un conduit, non visible sur Fig. 3.

A leur autre extrémité, les drains 12e sont fixés à une plaque 12i liée au piston 12d dont elle est écartée pour déterminer, avec le piston, une chambre 12j qui récupère le liquide ayant traversé les drains 12e. Les drains sont reliés à des ouvertures 12k traversant la plaque 12i et débouchant dans la chambre 12j. Les drains 12e s'étendent sensiblement parallèlement à l'axe géométrique du cylindre 12a lorsque le piston est éloigné au maximum de la plaque 12b.

Lors du pressage, le piston 12d effectue des mouvements d'aller et retour suivant la direction de l'axe du cylindre 12a, tandis que la plaque 12b est maintenue contre l'extrémité du cylindre 12a. Les drains souples 12e se déforment ; le liquide exprimé du produit traverse la paroi des drains 12e et est évacué de la chambre 12h. Lors de l'opération de pressage, le piston 12d et les plaques 12h, 12f, 12b peuvent être entraînés en rotation autour de l'axe géométrique du cylindre 12a.

Lorsque le pressage est terminé, le débâtissage de la boue pressée B s'effectue comme illustré sur Fig. 4. La plaque 12b se décale pour permettre l'ouverture de la chambre ; le piston 12d est amené à l'extrémité du cylindre 12a tournée vers la plaque 12b. La matière pressée B s'échappe par gravité dans l'espace ainsi libéré tandis que les drains 12e prennent une configuration en V. Un mouvement de rotation des drains et des plaques auxquelles ils sont fixés peut en outre être réalisé lors du débâtissage. Toutes ces opérations de débâtissage peuvent aisément être rendues automatiques.

La presse à piston 12, contrairement à d'autres dispositifs de filtration sous pression du type filtre-presse à plateau ou similaire, confère des avantages décisifs :
- la filtration s'effectue dans un cylindre fermé de sorte que les odeurs restent confinées pendant tout le pressage ;
- la gestion des odeurs est facilitée car on peut gérer une ouverture lente du cylindre pour mieux canaliser les odeurs.
- le débâtissage peut être effectué de manière automatique, notamment grâce au mouvement des drains 12e ;
- le produit déshydraté peut être débâti sous forme de boulettes de taille relativement petite à l'aide d'un émotteur ou d'un broyeur 13 (Fig.1), contrairement aux gâteaux de filtre-presse qui partent d'un seul tenant et dont la taille correspond à celle des plateaux du filtre-presse ;
- le débâtissage est effectué dans une zone géographique contrôlée qui peut être isolée de l'atmosphère par une enveloppe, ce qui permet de traiter les résidus de manière contrôlée et d'empêcher la propagation des odeurs.

La boue filtrée B (Fig. 4), obtenue en fin de pressage, sort compacte. Pour la rendre plus facilement transportable et stockable, elle est soumise à un émottage en tombant dans l'émotteur 13 (Fig.1) propre à diviser la boue filtrée et ultra-déshydratée en boulettes ou cordons de dimensions réduites, notamment de l'ordre de 10 mm. L'émotteur 13 peut comprendre une goulotte de réception 13a et deux cylindres 13b, 13c tournant en sens inverse, munis de dents ou de saillies qui engrènent, entre lesquelles la boue déshydratée subit une fragmentation.

Pour empêcher la diffusion des odeurs dans l'atmosphère, une trémie rigide ou une gaine souple J peut être prévue pour entourer l'émotteur 13 et la sortie de la presse 12, et créer ainsi une étanchéité vis-à-vis de l'atmosphère. L'émotteur 13 est en outre placé en légère dépression par une conduite 13d reliant le volume intérieur de l'émotteur 13 à l'unité d'aspiration 40.

Une désodorisation est mise en place au-dessus de la presse à piston 12 par une conduite 12.1 reliant le volume intérieur de la presse 12 à l'unité d'aspiration 40.

Le débâtissage de la presse à piston 12 a lieu en une fois dans une zone bien délimitée. Les odeurs pouvant s'échapper à la sortie de la presse et dans l'émotteur 13, notamment du fait de la chaleur encore restante, sont maîtrisées. L'ouverture de la presse est contrôlée pour permettre, au début de cette ouverture, l'échappement de la majeure partie des vapeurs génératrices d'odeurs qui sont aspirées par la conduite 12.1 et, le cas échéant, par la conduite 13d. Le tirage, assurant la dépression, de l'unité 40 est renforcé au moment de l'ouverture de la presse 12.

Pour l'automatisation, une mesure du temps de filtration de la boue à chaque pressage exercé par le piston 12d est effectuée. Les temps de filtration cumulés sont comparés à une valeur de référence. Si la durée de filtration, correspondant à la somme des temps cumulés, augmente, l'ensemble de commande M, formant unité de régulation, donne une consigne de température pour la boue dans la bâche 10, et donc pour la boue introduite dans la presse 12, supérieure d'un cran régulable pour une prochaine filtration.

L'injection 20 de réactif peut être pilotée si la température 10-1 dans la bâche 10 atteint un seuil haut programmable. Dans ce cas, on ne souhaite plus augmenter la température et on joue alors sur la dose de réactif injectée pour améliorer la filtrabilité de la boue dans la presse 12.

Pour assurer un stockage des boues déshydratées sortant de l'émotteur 13 dans de bonnes conditions, un équipement de refroidissement 14 est prévu, à la suite de l'émotteur 13, pour compléter le refroidissement du produit et le stocker à une température inférieure à 40°C, notamment à la température ambiante.

L'équipement 14 est également mis en dépression à l'aide d'une conduite 14a reliant le volume intérieur de l'équipement de refroidissement 14 à l'unité d'aspiration 40. Cette mise en dépression permet d'éviter des envols d'odeurs, bien que plus faibles à ce niveau.

De préférence, l'équipement 14 est constitué d'une vis, ou d'une double vis, refroidie à l'eau, qui fait progresser la boue déshydratée depuis la sortie de l'émotteur 13 jusqu'à un récipient de stockage 15. Le fluide utilisé pour refroidir la boue déshydratée circule en provenant d'une unité de refroidissement 60, et y retournant pour évacuer la chaleur extraite.

D'autres équipements de refroidissement pourraient être utilisés, en particulier des dispositifs de refroidissement à l'air, tels que des tapis perforés traversés par de l'air, qui sera ensuite traité pour éliminer les odeurs avant rejet à l'atmosphère.

Les incondensables récupérés par l'unité d'aspiration 40 sont refroidis et évacués par une conduite 40a. Ces incondensables sont avantageusement utilisés comme combustible dans une chaudière à des fins thermiques et de traitement des odeurs ; ils peuvent sinon être traités de manière plus fine par toute voie physico-chimique ou biologique adéquate.

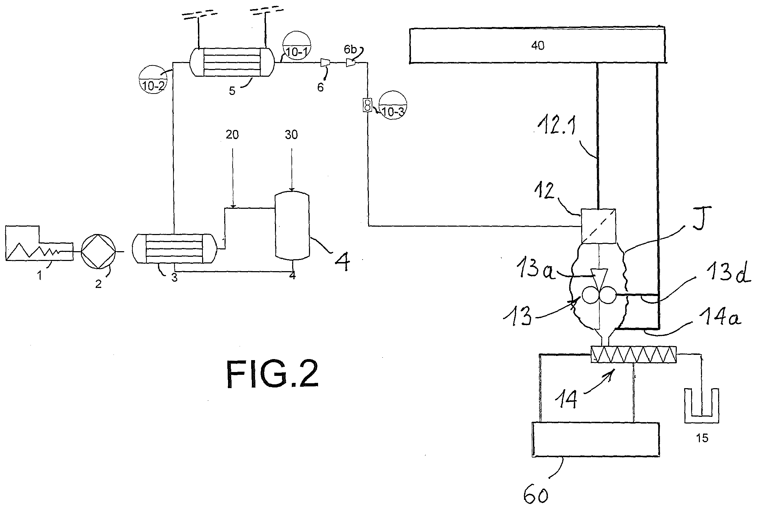

Fig. 2 illustre une variante de réalisation de l'invention. Les éléments identiques ou semblables à des éléments déjà décrits à propos de Fig. 1 sont désignés par les mêmes références numériques sans que leur description soit reprise.

Selon cette variante, les éléments de Fig. 1 constitués par la bâche 10 de stockage et la pompe haute pression 11 sont supprimés. Les équipements sont ainsi réduits et les odeurs dont la principale production a lieu au niveau de la bâche 10 de Fig. 1 peuvent être mieux gérées.

De l'instrumentation est ajoutée : une sonde de mesure de température 10-2 en amont de l'échangeur 5, une vanne 6b en aval de la vanne de décompression 6 et un débitmètre 10-3 en aval de la vanne 6b.

Dans cette configuration, le fonctionnement du conditionnement thermique par carbonisation hydrothermale, et celui de la déshydratation par presse à piston 12 sont concomitants. Cependant, du fait que le cycle de la presse à piston 12 n'est pas continu et comporte des phases de remplissage, phases de pressage et phases de vidange, il n'y a pas de flux permanent dans le circuit du conditionnement thermique. Cela ne peut qu'allonger le temps de séjour du produit à forte température et pression, et entraîne un meilleur traitement.

Afin de continuer à réguler la température au niveau de la sonde 10.1, ce qui est un point important pour le procédé de l'invention, le fonctionnement de l'échangeur 5 est couplé à la mesure de débit 10-3. Lorsque le débit est nul, par exemple lors de la phase de vidange du réacteur 4, la circulation du fluide de refroidissement dans l'échangeur 5 est arrêtée.

En outre, le débit de remplissage de la presse 12, correspondant au débit mesuré 10-3, est contrôlé par l'organe 6 de décompression. Dans ce cas, l'organe 6 est du type pompe inversée, pouvant gérer la régulation de la pression et l'arrêt de la vidange du produit, notamment de la boue. La vanne 6b est installée en aval de l'organe de décompression 6, permet de s'assurer de la non-fuite de débit.

Enfin, le pompage initial, assuré par l'ensemble de pompage 1, 2 est également commandé en débit par la presse à piston 12. De plus, dans le cadre de cette variante, il est possible de mettre directement une benne sous la presse à piston pour la déshydratation sans refroidissement.

La combinaison, selon l'invention, d'un conditionnement thermique de produits pâteux par un traitement de type carbonisation hydrothermale, avec une déshydratation par presse à piston permet d'obtenir, avec une consommation minimale d'énergie, des produits déshydratés présentant une siccité supérieure à 50 %, notamment de l'ordre de 65 %, et de maîtriser les odeurs qui sont empêchées de se répandre dans l'atmosphère. Les dimensions de l'ensemble de l'installation sont réduites par rapport à des installations classiques effectuant une ultra-déshydratation de boues.

## Revendications

1. Procédé d'ultra-déshydratation de produits épaissis ou pâteux, formant une biomasse, de boues de station d'épuration, **caractérisé en ce que** les produits, de siccité de 4 à 25%, sont soumis aux étapes suivantes :
- traitement de type carbonisation hydrothermale, comprenant une mise sous pression (1,2) et un conditionnement thermique (30) pour un séjour dans un réacteur fermé (4), suivi d'une décompression (6),
- déshydratation des produits par presse à piston (12) jusqu'à obtention d'une siccité supérieure à 50%,
- la température du produit en amont de la déshydratation par presse à piston étant régulée par refroidissement entre 40 et 90°C, avantageusement à environ 70°C, afin d'optimiser la filtrabilité dans la presse à piston,
les étapes du procédé étant effectuées en espace confiné permettant d'empêcher la diffusion d'odeurs dans l'atmosphère,
- la presse à piston (12) étant prévue pour effectuer un pressage des produits à travers des drains souples (12e) formant filtres, perméables au liquide qui passe, pour être évacué, de l'extérieur à l'intérieur des drains sous l'effet de la pression entre deux plaques (12f, 12i) entre lesquelles s'étendent les drains, lesquels se déforment lorsque les plaques se rapprochent l'une de l'autre, tandis que les matières solides sont retenues à l'extérieur des drains pour être évacuées lors du débâtissage,
- pour le traitement de type carbonisation hydrothermale, la mise sous pression dans le réacteur étant comprise entre 10 et 30 bars, de préférence de l'ordre de 20 bars, et le conditionnement thermique étant assuré par un chauffage des produits entre 150 et 250°C dans le réacteur.

2. Procédé selon la revendication précédente, **caractérisé en ce qu'**il comporte un préchauffage (3) du produit avant le traitement de type carbonisation hydrothermale.

3. Procédé selon l'une quelconque des revendications précédentes, **caractérisé en ce que** le traitement de type carbonisation hydrothermale comprend les étapes supplémentaires suivantes
- une injection (20) de réactif en amont ou dans le réacteur (4) pour favoriser la réaction,
- un chauffage (30) pour compléter la température au niveau du réacteur (4).

4. Procédé selon la revendication 1, **caractérisé en ce que** la régulation de la température du produit en amont de la déshydratation est effectuée à l'aide d'un échangeur (5) refroidisseur.

5. Procédé selon l'une quelconque des revendications précédentes, **caractérisé en ce qu'**un refroidissement dédié (14) du produit en sortie de la presse à piston est effectué pour diminuer sa température, de préférence à une valeur inférieure à 40°C.

6. Procédé selon la revendication 5, **caractérisé en ce que** le refroidissement dédié (14) est de type indirect et qu'il est effectué en dépression.

7. Procédé selon l'une quelconque des revendications précédentes, **caractérisé en ce qu'**une désodorisation régulée est assurée pendant la phase de débâtissage par une mise en dépression (12.1, 40) permettant un soutirage des gaz ou vapeurs générant les odeurs.

8. Installation d'ultra-déshydratation de produits épaissis ou pâteux formant une biomasse, de boues de station d'épuration, **caractérisée en ce qu'**elle comporte :
- une unité pour assurer un traitement de type carbonisation hydrothermale, comprenant un moyen (1, 2) de mise sous pression des produits, un moyen (3) de préchauffage de ces produits, un réacteur fermé (4) pour un séjour de carbonisation des produits réchauffés, et un moyen de décompression (6) des produits,
- un dispositif de refroidissement des produits sortant du traitement de type carbonisation hydrothermale, en particulier un échangeur refroidisseur (5),
- une presse à piston (12) pour la déshydratation des produits après traitement de type carbonisation hydrothermale et refroidissement, avec obtention d'une siccité supérieure à 50%,
les différents composants de l'installation étant en espace confiné permettant d'empêcher la diffusion d'odeurs dans l'atmosphère et de gérer ces odeurs,
- la presse à piston (12) étant prévue pour effectuer un pressage des produits à travers des drains souples (12e) formant filtres, perméables au liquide qui passe, pour être évacué, de l'extérieur à l'intérieur des drains sous l'effet de la pression entre deux plaques (12f, 12i) entre lesquelles s'étendent les drains, lesquels se déforment lorsque les plaques se rapprochent l'une de l'autre, tandis que les matières solides sont retenues à l'extérieur des drains pour être évacuées lors du débâtissage

9. Installation selon la revendication 8, **caractérisée en ce qu'**une bâche de stockage (10) couverte et désodorisée est disposée entre l'unité de traitement de type carbonisation hydrothermale et la presse à piston (12).

10. Installation selon l'une quelconque des revendications 8 à 9, **caractérisée en ce qu'**elle comporte un ensemble de commande (M) permettant de contrôler la filtrabilité du produit, l'ensemble de commande effectuant une mesure du temps de filtration de la boue à chaque pressage exercé par un piston (12d) de la presse à piston (12), les temps de filtration cumulés étant comparés à une valeur de référence, et si la durée de filtration, correspondant à la somme des temps cumulés, augmente, l'ensemble de commande (M) donne une consigne de température supérieure pour la boue introduite dans la presse (12).

11. Installation selon la revendication 10, **caractérisée en ce que** l'ensemble de commande (M) contrôle la quantité d'un réactif (20) injecté si la régulation de la température vient à sa limite.

12. Installation selon l'une quelconque des revendications 8 à 10, **caractérisée en ce que** l'ensemble des zones pouvant être génératrices d'odeurs, en particulier un stockage (10), la presse à piston (12) et un émotteur (13) sont mises en dépression par un système de ventilation désodorisation (40).

## Patentansprüche

1. Verfahren zur Ultra-Entwässerung von verdickten oder pastösen Produkten, die eine Biomasse aus Klärschlämmen bilden, **dadurch gekennzeichnet, dass** die Produkte mit einem Trockenheitsgrad von 4 bis 25% den folgenden Schritten unterzogen werden:
- Behandlung in der Art einer hydrothermalen Karbonisierung mit einer Druckbeaufschlagung (1, 2) und einer Wärmebehandlung (30) für einen Aufenthalt in einem geschlossenen Reaktor (4), gefolgt von einer Druckentlastung (6),
- Entwässerung der Produkte mittels einer Kolbenpresse (12) bis zum Erhalt eines Trockenheitsgrads von über 50%,
- wobei die Temperatur des Produktes vor der Entwässerung mittels einer Kolbenpresse durch Abkühlung auf eine Temperatur zwischen 40°C und 90°C geregelt wird, vorteilhafterweise auf 70°C, um die Filtrierbarkeit in der Kolbenpresse zu verbessern,
wobei die Verfahrensschritte in einem geschlossenen Raum durchgeführt werden, durch den die Freisetzung von Gerüchen in die Atmosphäre verhindert wird,
wobei die Kolbenpresse (12) dafür vorgesehen ist, eine Pressung der Produkte durch biegsame, Filter bildende Leitungen (12e) durchzuführen, welche für die Flüssigkeit durchlässig sind, die von außen in das Innere der Leitungen aufgrund des Drucks zwischen zwei Platten (12f, 12i), zwischen denen sich die Leitungen erstrecken, eindringt, wobei diese sich verformen, wenn sich die Platten einander nähern, während die Feststoffe außerhalb der Leitungen zurückgehalten werden, um bei der Schlammentleerung abgeleitet zu werden,
wobei für die Behandlung in der Art einer hydrothermalen Karbonisierung, die Druckbeaufschlagung in dem Reaktor zwischen 10 und 30 bar beträgt, bevorzugterweise etwa 20 bar, und die Wärmebehandlung durch eine Erwärmung der Produkte zwischen 150°C und 250°C im Reaktor erfolgt.

2. Verfahren nach Anspruch 1, **dadurch gekennzeichnet, dass** es ein Vorwärmen (3) des Produktes vor der Behandlung in der Art einer hydrothermalen Karbonisierung umfasst.

3. Verfahren nach einem der vorhergehenden Ansprüche, **dadurch gekennzeichnet, dass** die Behandlung in der Art einer hydrothermalen Karbonisierung die folgenden zusätzlichen Schritte umfasst
- Einspritzung (20) von Reagenz stromaufwärts von dem oder in den Reaktor (4), um die Reaktion zu fördern,
- Erwärmung (30), um die Temperatur im Reaktor (4) zu steigern.

4. Verfahren nach Anspruch 1, **dadurch gekennzeichnet, dass** die Regelung der Temperatur des Produktes stromaufwärts von der Entwässerung mittels eines kühlenden Wärmetauschers (5) erfolgt.

5. Verfahren nach einem der vorhergehenden Ansprüche, **dadurch gekennzeichnet, dass** eine spezifische Kühlung (14) des aus der Kolbenpresse austretenden Produktes durchgeführt wird, um seine Temperatur bevorzugterweise auf einen Wert unter 40°C zu senken.

6. Verfahren nach Anspruch 5, **dadurch gekennzeichnet, dass** die spezifische Kühlung (14) indirekter Art ist und dass diese unter Unterdruck durchgeführt wird.

7. Verfahren nach einem der vorhergehenden Ansprüche, **dadurch gekennzeichnet, dass** eine geregelte Desodorierung während der Schlammentleerungsphase durch Erzeugung eines Unterdrucks (12.1, 40) sichergestellt wird, der die Abführung der Gase oder Dämpfe ermöglicht, welche die Gerüche erzeugen.

8. Anlage zur Ultra-Entwässerung von verdickten oder pastösen Produkten, die eine Biomasse aus Klärschlämmen bilden, **dadurch gekennzeichnet, dass** sie folgendes umfasst:
- eine Einheit zur Durchführung einer Behandlung in der Art einer hydrothermalen Karbonisierung mit einer Einrichtung (1, 2) zur Druckbeaufschlagung der Produkte, einer Einrichtung (3) zum Vorwärmen dieser Produkte, einem geschlossenen Reaktor (4) für einen Aufenthalt zur Karbonisierung der erwärmten Produkte, und einer Einrichtung zur Erzeugung eines Unterdrucks (6) der Produkte,
- eine Vorrichtung zur Kühlung der aus der Behandlung in der Art einer hydrothermalen Karbonisierung austretenden Produkte, insbesondere einen kühlenden Wärmetauscher (5),
- eine Kolbenpresse (12) zur Entwässerung der Produkte nach der Behandlung in der Art einer hydrothermalen Karbonisierung und der Abkühlung, bei der ein Trockenheitsgrad von über 50% erreicht wird,
wobei sich die verschiedenen Komponenten der Anlage in einem geschlossenen Raum befinden, durch den die Freisetzung von Gerüchen in die Atmosphäre verhindert und die Lenkung dieser Gerüche ermöglicht wird und
wobei die Kolbenpresse (12) dazu vorgesehen ist, eine Pressung der Produkte durch biegsame, Filter bildende Leitungen (12e) durchzuführen, welche für die Flüssigkeit durchlässig sind, die von außen in das Innere der Leitungen aufgrund des Drucks zwischen zwei Platten (12f, 12i), zwischen denen sich die Leitungen erstrecken, eindringt, wobei diese sich verformen, wenn sich die Platten einander nähern, während die Feststoffe außerhalb der Leitungen zurückgehalten werden, um bei der Schlammentleerung abgeleitet zu werden,

9. Anlage nach Anspruch 8, **dadurch gekennzeichnet, dass** eine geschlossene und desodorierte Plane (10) zwischen der Einheit zur Behandlung in der Art einer hydrothermalen Karbonisierung und der Kolbenpresse (12) angeordnet ist.

10. Anlage nach einem der Ansprüche 8 bis 9, **dadurch gekennzeichnet, dass** sie eine Steuereinheit (M) umfasst, mit der die Filtrierbarkeit des Produktes kontrolliert werden kann, wobei die Steuereinheit eine Messung der Filtrierzeit des Schlamms bei jedem von einem Kolben (12d) der Kolbenpresse (12) ausgeübten Druck durchführt, wobei die kumulierten Filtrierzeiten mit einem Referenzwert verglichen werden, und, wenn die der Summe der kumulierten Zeiten entsprechende Filtrierzeit ansteigt, die Steuereinheit (M) eine höhere Solltemperatur für den in die Presse (12) eingeleiteten Schlamm ausgibt.

11. Anlage nach Anspruch 10, **dadurch gekennzeichnet, dass** die Steuereinheit (M) die eingespritzte Reagenzmenge (20) regelt, wenn die Temperaturregelung ihre Grenze erreicht.

12. Anlage nach einem der Ansprüche 8 bis 10, **dadurch gekennzeichnet, dass** sämtliche Zonen, in denen sich Gerüche bilden können, insbesondere ein Sammelbehälter (10), die Kolbenpresse (12) und ein Ausgang (13) einem Unterdruck mittels eines Desodorisierungs-Entlüftungssystems (40) ausgesetzt werden.

## Claims

1. A method for ultra-dehydrating thickened or pasty products, forming a biomass of treatment plant sludge, **characterized in that** the products, having a dryness of 4 to 25%, are subjected to the following steps:
- hydrothermal carbonization treatment, comprising a pressurization (1, 2) and a thermal conditioning (30) for a residence time in a closed reactor (4), followed by a decompression (6),
- then dehydration of the products by a ram press (12), until obtaining a dryness of greater than 50%,
- the temperature of the product upstream of the dehydration by the ram press being regulated by cooling between 40 and 90°C, advantageously at around 70°C, in order to optimize the filterability in the ram press, the steps of the method being carried out in a confined space that makes it possible to prevent the diffusion of odors into the atmosphere.
the ram press (12) being provided in order to carry out a pressing of the products through flexible drains (12e) that form filters, which are permeable to the liquid that passes from the outside to the inside of the drains under the effect of the pressure between two plates (12f, 12i) between which the drains extend, which drains deform when the plates approach one another, whilst the solid materials are retained on the outside of the drains in order to be discharged during the disassembling.
- for the hydrothermal carbonization treatment, the pressurization in the reactor being between 10 and 30 bar, preferably of the order of 20 bar, and the thermal conditioning being carried out by heating the products between 150 and 250°C in the reactor.

2. The method as claimed in claim 1, **characterized in that** it comprises a preheating (3) of the product before the hydrothermal carbonization treatment.

3. The method as claimed in any one of the preceding claims, **characterized in that** the hydrothermal carbonization treatment comprises the following additional steps:
- an injection (20) of reactant upstream of or into the reactor (4) in order to promote the reaction,
- a heating (30) in order to supplement the temperature in the reactor (4).

4. The method as claimed in claim 1, **characterized in that** the regulation of the temperature of the product upstream of the dehydration is carried out with the aid of a chiller heat exchanger (5).

5. The method as claimed in any one of the preceding claims, **characterized in that** a dedicated cooling (14) of the product exiting the ram press is carried out in order to reduce its temperature, preferably to a value below 40°C.

6. The method as claimed in claim 5, **characterized in that** the dedicated cooling (14) is of indirect type and that it is carried out under vacuum.

7. The method as claimed in any one of the preceding claims, **characterized in that** a regulated deodorization is carried out during the disassembling phase by a vacuum application (12.1, 40) enabling a bleeding of the gases or vapors that generate the odors.

8. An apparatus for ultra-dehydrating thickened or pasty products forming a biomass, in particular treatment plant sludge, **characterized in that** it comprises:
- a unit for carrying out a hydrothermal carbonization treatment, comprising a means (1, 2) for pressurizing the products, a means (3) for preheating these products, a closed reactor (4) for a carbonization residence time of the reheated products, and a means (6) for decompressing the products,
- a device for cooling the products exiting the hydrothermal carbonization treatment, in particular a chiller heat exchanger (5),
- a ram press (12) for dehydrating the products after hydrothermal carbonization treatment and cooling, obtaining a dryness of greater than 50%,
the various components of the apparatus being in a confined space that makes it possible to prevent the diffusion of odors into the atmosphere and to manage these odors, and
the ram press (12) being provided in order to carry out a pressing of the products through flexible drains (12e) that form filters, which are permeable to the liquid that passes from the outside to the inside of the drains under the effect of the pressure between two plates (12f, 12i) between which the drains extend, which drains deform when the plates approach one another, whilst the solid materials are retained on the outside of the drains in order to be discharged during the disassembling.

9. The apparatus as claimed in claim 8, **characterized in that** a covered and deodorized storage tank (10) is positioned between the hydrothermal carbonization treatment unit and the ram press (12).

10. The apparatus as claimed in any one of claims 8 to 9, **characterized in that** it comprises a control assembly (M) that makes it possible to control the filterability of the product, the control assembly carrying out a measurement of the filtration time of the sludge at each pressing carried out by a ram (12d) of the ram press (12), the combined filtration times being compared to a reference value, and if the filtration duration, corresponding to the sum of the combined times, increases, the control assembly (M) gives a higher temperature set point for the sludge introduced into the press (12).

11. The apparatus as claimed in claim 10, **characterized in that** the control assembly (M) controls the amount of reactant (20) injected if the regulation of the temperature reaches its limit.

12. The apparatus as claimed in any one of claims 8 to 10, **characterized in that** all of the zones that may generate odors, in particular the store (10), the ram press (12) and the crusher (13) are placed under vacuum by a deodorizing ventilation system (40)
